# EUROPÄISCHE PATENTANMELDUNG

(11) **EP 0 989 650 A1**
(43) Veröffentlichungstag der Anmeldung: **29.03.2000**
(21) Anmeldenummer: 98810945.0
(22) Anmeldetag: 21.09.1998
(51) Int. Cl.: H02B 5/00, H02B 5/06

(54) **Hochspannungssammelschiene mit Abgängen in Freiluftisolationsabständen**

(71) Anmelder: Asea Brown Boveri AG, 5401 Baden (CH)
(72) Erfinder: Bucher, Daniel, 8620 Wetzikon (CH); Müller, Lorenz, Dr., 5412 Gebenstorf (CH)
(74) Vertreter: Kaiser, Helmut

(57) **Zusammenfassung**

Bei einer gasisolierten Schaltanlage ist eine Sammelschiene (10) vorgesehen, die über Sammelschienenabgänge mit Freiluftdurchführungen (6) verbunden ist. Die Sammelschienenabgänge sind in Freiluftisolationsabständen voneinander angeordnet. Die üblicherweise vorgesehenen gespreizten Rohrausleitungen können so eingespart werden.

## Beschreibung

Die vorliegende Erfindung bezieht sich auf eine elektrische Vorrichtung im Bereich der Hochspannungstechnik.

Eines der wesentlichen Probleme im Bereich der Hochspannungstechnik ist die Isolation der auftretenden Leiterpotentiale voneinander und gegen geerdete Einrichtungen sowie gegen die übrige Umwelt. Dazu existieren verschiedene Isolationstechnologien, die sich grundsätzlich voneinander unterscheiden. Und zwar wird unterschieden zwischen einerseits den Freiluftsystemen, bei denen die Isolation über ausreichende Abstände in einer gewöhnlichen Luftatmosphäre erfolgt, und andererseits verschiedenen über Isolationsmedien isolierenden Systemen. Bei letzteren führt ein geeignetes Isolationsmedium mit deutlich besseren Isolationseigenschaften als die Luftatmosphäre letztlich zu kürzeren Isolationsstrecken und damit zu einer kompakteren Bauweise. Durch geeignete Kapselungen können weiterhin Vorteile im Hinblick auf den Berührungsschutz, die Unempfindlichkeit gegen Umwelteinflüsse, z. B. Blitzeinschläge, Verschmutzung usw. erzielt werden. Weiterhin werden bestimmte Funktionselemente, z. B. Schalter, heute praktisch nur in Systemen mit einem Isolationsmedium ausgeführt, weil dort konstruktionsbedingt relativ kurze Isolationsstrecken vorteilhaft sind.

Beispiele für solche Isolationsmedien sind verschiedene Gase, vor allem wenn sie zur Erhöhung der Durchschlagfestigkeit durch Verringerung der mittleren freien Weglänge unter gegenüber Atmosphäre erhöhtem Druck stehen. Im einfachsten Fall kann dies Druckluft sein, im gegenwärtigen Stand der Technik hat sich jedoch SF₆ zur Druckgasisolierung durchgesetzt. Bestimmte Gase, insbesondere SF₆ können über die reine Isolation hinaus vorteilhaft auch als Löschgas in Leistungsschaltern Verwendung finden.

Neben den Gasen kommen aber auch andere Materialien in Betracht, z. B. verschiedene Flüssigkeiten, vorwiegend Öle wie Silikonöl oder Mineralöl.

Insgesamt haben sowohl die Freiluftsysteme wie auch die Systeme mit den Isolationsmedien spezifische Vorteile, die, je nachdem ob Gesichtspunkte wie Raumverfügbarkeit, Kosten, Personengefährdung, Witterungseinflüsse usw. im Vordergrund stehen, zum Tragen kommen. Dementsprechend sind in der Praxis sowohl Freiluftsysteme verbreitet, beispielsweise bei der Leistungsfernübertragung über Überlandleitungen, wie auch Anlagen mit Isolationsmedien, z. B. bei Schaltanlagen.

Daher ist es in der Praxis immer wieder wesentlich, zwischen beiden Systemen eine geeignete Schnittstelle herzustellen, also einen Übergang von dem einen auf das andere Isolationssystem zu schaffen. Geeignete Durchführungen für den Übergang eines einzelnen Pols sind dabei Stand der Technik.

Die Erfindung geht aus von einer bekannten Vorrichtung zum elektrischen Verbinden einer ersten Freilufthochspannungseinrichtung mit einer zweiten Hochspannungseinrichtung über ein mit einem Isolationsmedium isoliertes Leitungssystem mit einer Sammelschiene, die über Sammelschienenabgänge mit Durchführungen mit der Freilufthochspannungseinrichtung verbunden ist.

Dabei ist der Begriff 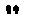 Hochspannungseinrichtung" sehr allgemein zu verstehen, beinhaltet also insbesondere auch elektrische Leitungseinrichtungen an sich.

Das der Erfindung zugrunde liegende technische Problem besteht darin, eine solche Vorrichtung im Hinblick auf eine Verbesserung der technischen Leistungsmerkmale und eine Kostenverringerung weiterzuentwickeln.

Erfindungsgemäß wird dieses Problem dadurch gelöst, daß die genannten Sammelschienenabgänge an der Sammelschiene in Freiluftisolationsabständen voneinander liegen.

Hiermit verbunden sieht die Erfindung weiterhin vor eine passend ausgestaltete Hochspannungsbaueinheit mit einem Schalter, einem Anschluß für einen Sammelschienenabgang und einer Durchführung zu einem Freilufthochspannungsanschluß, wobei der Schalter, der Anschluß und ein anschlußseitiger Teil der Durchführung mit einem Isolationsmedium isoliert sind und wobei die Durchführung ohne zwischengeschaltete Ausleitung an dem Schalter angeschlossen ist.

Erfindungsgemäß wird also die Sammelschiene des Isolationsmediumsystems soweit aufgespreizt, daß ihre Abgänge bereits die für das Freiluftsystem notwendigen Isolationsabstände voneinander aufweisen. Dadurch können unmittelbar an den Abgängen jeweils Durchführungen und an den Durchführungen die Anschlüsse der Freilufthochspannungsanlage angebracht werden, ohne daß durch zusätzliche Ausleitungen in dem Isolationsmediumsystem eine Verbindung der (konventionellerweise eng beabstandeten) Abgänge der Sammelschiene mit einem wegen der Freiluftabstände breit aufgefächerten Feld von Durchführungen mit Freiluftanschlüssen vorgenommen werden müßte. Es ist somit möglich, praktisch das gesamte Ausleitungssystem einzusparen, indem lediglich die Länge der Sammelschiene (oder des Sammelschienensystems) entsprechend vergrößert wird. Da die Zahl der Abgänge der Sammelschiene und damit die Zahl der konventionellerweise benötigten Ausleitungen im allgemeinen sehr viel größer ist als die Zahl der einzelnen Sammelschienen (-Pole) kann somit in erheblichem Umfang Leitungsmaterial in dem entsprechenden Isolationsmediumsystem eingespart werden, also beispielsweise SF₆-druckisolierte Leitungsstücke (SF₆-GIS, gas-insulated switchgear).

Es ist unmittelbar anschaulich, daß damit in erheblichem Umfang Anschaffungskosten entfallen. Eine kleinere Zahl von verbauten Leitungsstücken, bzw. eine geringere Gesamtleitungslänge impliziert aber darüber hinaus eine geringere Gesamtwahrscheinlichkeit eines technischen Defekts. Ferner sind die Anforderungen an Größe und Stabilität des Statiksystems geringer, also an das Fundament und einen Stahlrohraufbau oder dergleichen. Schließlich kann mit der Einsparung des konventionellerweise recht komplexen Ausleitungssystems im allgemeinen auch erheblich an Baufläche oder Bauvolumen eingespart werden, wie das weiter unten folgende Ausführungsbeispiel verdeutlicht.

Die Erfindung ist dabei so zu verstehen, daß zumindest eine Sammelschiene vorliegen muß, deren Abgänge auf Freiluftisolationsabstände aufgespreizt sind. Es können natürlich auch Mehrfachsammelschienen oder mehrere Sammelschienen Verwendung finden, wobei die Erfindung bei einer oder mehreren der Sammelschienen verwirklicht sein kann.

Soweit bei dieser Erfindung von Schaltern gesprochen wird, sind damit insbesondere Leistungsschalter gemeint. Es kommen jedoch auch andere Schaltertypen in Frage, insbesondere sogenannte Lastschalter und Switcher, die Lasten, jedoch nicht den vollständigen Kurzschlußstrom in allen Phasenlagen schalten können.

Bislang wurde in Zusammenhang mit der erfindungsgemäßen Vorrichtung mit der Sammelschiene allgemein von einem Isolationsmedium gesprochen. Die Erfindung ist in diesem Sinn soweit allgemein zu verstehen, als daß sie bei grundsätzlich jeder Technologie mit einem anderen Isolationsmedium als der üblichen Atmosphärenluft sinnvoll ist, solange durch das entsprechende Isolationsmedium kürzere Isolationsabstände möglich sind als in Freilufttechnologie. Bevorzugt bezieht sich die Erfindung jedoch auf die an sich bekannte GIS-Technologie, vorzugsweise mit SF₆ als Isolationsmedium. Andere Gase sind natürlich genauso denkbar. Dann handelt es sich bei der Sammelschiene um eine - von dem Abstand der Abgänge abgesehen - an sich konventionell aufgebaute GIS-Röhrensammelschiene.

Als in der obigen Nomenklatur erste Freilufthochspannungseinrichtung kommt insbesondere eine Freiluftüberlandleitung in Betracht. Die zweite Hochspannungseinrichtung kann, muß aber nicht in Freilufttechnologie ausgeführt sein. Es kann sich um eine beliebige Hochspannungseinrichtung handeln, insbesondere auch in der soeben erwähnten GIS-Technologie. Insbesondere kann die Sammelschiene der erfindungsgemäßen Vorrichtung bereits ein wesentlicher Bestandteil dieser zweiten Hochspannungseinrichtung sein.

Wenn andererseits die zweite Hochspannungseinrichtung ebenfalls in Freilufttechnologie ausgeführt ist, so ist es erfindungsgemäß bevorzugt, die Freiluft-Beabstandung der Sammelschienenabgänge auch zu der zweiten Hochspannungseinrichtung hin vorzusehen.

Die einfachste Struktur einer für die Erfindung geeigneten Sammelschiene ist eine im allgemeinen einphasig (oder dreiphasig) gekapselte Einfachsammelschiene, wie sie im Ausführungsbeispiel dargestellt ist.

Zugunsten einer großen Flexibilität der erfindungsgemäßen Vorrichtung weist jeder der Sammelschienenabgänge vorzugsweise einen eigenen einpoligen Schalter auf. Dieser Schalter verwendet dabei den Sammelschienenabgang mit der Durchführung, so daß die Sammelschiene von dem betreffenden Freiluftanschluß getrennt werden kann.

Bei der Aufspreizung der Sammelschienen auf Freiluftabstände entsteht nun durch eine möglichst direkte Verbindung zwischen der Durchführung, gegebenenfalls dem Schalter und der Sammelschiene die Möglichkeit eines für jeden einzelnen Freiluftanschlußpol modularen Aufbaus. Dazu sieht die Erfindung insbesondere vor, an dem jeweiligen Sammelschienenabgang eine Baueinheit mit zumindest dem genannten Schalter vorzusehen, die ohne weitere Umbauten an der Sammelschiene oder an der Durchführung bzw. der Freiluftanlage gelöst und weggezogen werden kann. Dadurch ergibt sich nicht nur eine gute Reparaturfreundlichkeit der Gesamtvorrichtung im Hinblick auf das Abbauen eines defekten Teils (häufig ist das ein Schalter), sondern darüber hinaus die Möglichkeit der Bevorratung 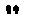 redundanter" Module zum zeitlich unmittelbaren Ersatz für ein defektes Modul.

Eine Möglichkeit für das Wegziehen dieses Moduls von der Sammelschiene und von der Durchführung besteht darin, daß das Modul auf einem Wagen oder einem vergleichbaren Gerüst montiert ist, der oder das über Räder, Schienen oder dergleichen verschoben werden kann.

Häufig werden Leistungsschalter oder Lastschalter mit mindestens einem Trennelement (z. B. 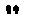 Trennern") und zumindest einem Erder sowie Meßeinrichtungen kombiniert. Vorzugsweise werden solche und weitere lokale (d. h. zu diesem Abgang und diesem Freiluftanschluß gehörige) Bauteile mit in die Module integriert. Das Modul kann also eine über einen einfachen Leistungsschalter oder Lastschalter hinausgehende komplexere 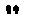 Schalt- und Meßmaschine" sein. Dies hat vor allem auch den Vorteil, daß die üblicherweise wartungs- oder reparaturanfälligen Teile durch die beschriebenen Vorteile der Modulbauweise miterfaßt sind.

Der Leistungsschalter oder Lastschalter kann in dem Modul vertikal angeordnet sein, wobei die Sammelschiene mit ihrem Abgang vorzugsweise am unteren Anschluß des Schalters und die Durchführung vorzugsweise am oberen Anschluß angeschlossen ist. Die vertikale Bauweise bringt gewissermaßen das Bezugsniveau für die vorzugsweise ebenfalls vertikal montierte Durchführung von der relativ tiefen Lage der Sammelschiene aus etwa um die Bauhöhe des Schalters nach oben, so daß der Freiluftanschluß an der Durchführung eine aus Sicherheitsgründen vorteilhafte Höhe deutlich über Personengröße haben kann.

Für den Fall, daß ein Modul ohne Durchführung abgebaut und die Durchführung bei diesem Abbau an ihrem Platz bleiben soll, können die entsprechenden Trennvorrichtungen zwischen dem Modul und der Durchführung sowie zwischen dem Modul und dem Sammelschienenabgang in horizontaler Richtung lösbar sein, so daß das Modul durch ein horizontales Verschieben beispielsweise des beschriebenen Wagens abgenommen werden kann. Hierzu wird auf das Ausführungsbeispiel verwiesen. Es ist natürlich auch möglich, die Durchführung mit in das Modul aufzunehmen, also die Trennvorrichtung zu der Sammelschiene und den Freiluftanschluß an der Durchführung abzubauen, um das Modul von der übrigen Hochspannungseinrichtung zu lösen.

Aus den vorstehenden Erläuterungen wird bereits deutlich, daß die erfindungsgemäße Sammelschienenspreizung die Möglichkeit der Konstruktion ebenfalls für die Erfindung charakteristischer Hochspannungsbaueinheiten für jeden Freiluftanschluß nach sich zieht. Demgemäß bezieht sich die Erfindung auch auf eine solche isolierte Hochspannungsbaueinheit mit einem Schalter und einem Anschluß für einen Sammelschienenabgang sowie einer Durchführung zu einem Freiluftanschluß. Diese Hochspannungsbaueinheit zeichnet sich dadurch aus, daß die Durchführung ohne die bereits beschriebenen Ausleitungen an dem Schalter angebracht werden kann. D. h. konkret, daß die Durchführung entweder unmittelbar an dem Schalter angeschlossen ist oder durch Vermittlung weiterer Bauteile, deren Sinn jedoch nicht die Überbrückung einer Strecke ist (wodurch sich eben gerade die erwähnten Ausleitungen definieren). In Frage kommen für solche zwischen der Durchführung und dem Schalter möglichen Bauteile Trenner, Erder, Meßeinrichtungen für Strom, Spannung, Parameter des Isolationsmediums usw. sowie Bauteile zur Kompensation eines Montagewinkels (Winkelbauteile), zur Kompensation von Vibrationen, mechanischen Spannungen, Längenverschiebungen usw.

Erfindungsgemäß ist es dabei einerseits möglich, mit Hochspannungsbaueinheiten zu arbeiten, die die Durchführung einschließen, bei denen jedoch ein zumindest den Schalter umfassendes Modul ohne die Durchführung abgebaut werden kann, oder die gesamte Hochspannungsbaueinheit einschließlich der Durchführung als Modul aufzufassen, wobei zwischen der Durchführung und dem restlichen Modul keine Trennvorrichtung vorgesehen sein muß.

Nach dieser allgemeinen Darstellung der Erfindung wird die Erfindung nun konkreter erläutert anhand dreier in Beziehung zueinander stehender Beispiele, von denen eines den Stand der Technik und die anderen die Erfindung in zwei Ausführungsformen darstellen. Dazu zeigt in den beiliegenden Figuren:
Figur 1 eine schematisierte Draufsicht auf eine konventionelle Umspannstation in GIS-Ausführung an Hochspannungsüberlandleitungen mit einem Transformator;
Figur 2 eine Figur 1 entsprechende schematisierte Draufsicht auf eine Umspannstation in GIS-Ausführung mit einer erfindungsgemäßen Vorrichtung mit einer Einfachsammelschienenkonfiguration;
Figur 3 einen Schnitt A-A durch die Umspannstation nach Figur 2;
Figur 4 einen Schnitt B-B durch die Umspannstation nach Figur 2;
Figur 5 einen Schnitt C-C durch die Umspannstation in Figur 2;
Figur 6 einen Schnitt D-D durch die Umspannstation nach Figur 2;
Figur 7 einen Figur 6 entsprechenden Schnitt mit einer alternativen Ausgestaltung;
Figur 8 ein formales Schaltschema zu der in Figur 2 dargestellten Einfachsammelschienenkonfiguration;
Figur 9 eine den Figuren 1 und 2 entsprechende schematisierte Draufsicht auf eine Umspannstation mit einer weiteren erfindungsgemäßen Vorrichtung mit einer H-Konfiguration;
Figur 10 einen Schnitt B-B durch die Umspannstation nach Figur 9;
Figur 11 einen Schnitt C-C durch die Umspannstation nach Figur 9;
Figur 12 einen Schnitt A-A durch die Umspannstation nach Figur 9;
Figur 13 einen Schnitt D-D durch die Umspannstation nach Figur 9; sowie
Figur 14 ein formales Schaltschema zu der in Figur 9 dargestellten H-Konfiguration.

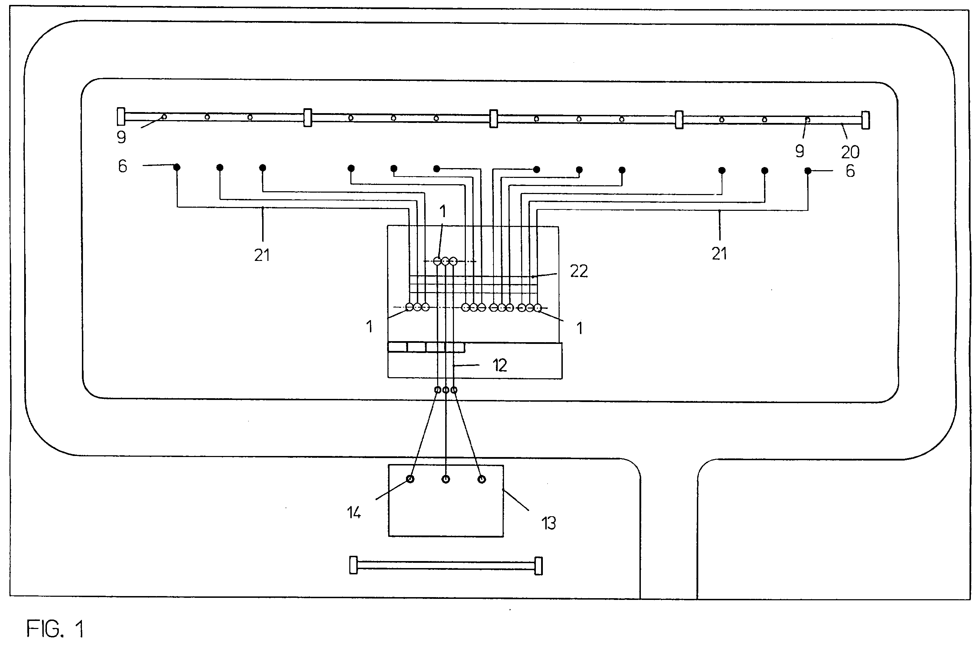

Zunächst zeigt Figur 1 eine Draufsicht auf eine Umspannstation nach dem Stand der Technik. Dabei ist mit dem äußeren rechtwinkligen Rahmen zunächst eine Einzäunung der Umspannstation dargestellt sowie eine darin befindliche Fahrstraße. Dies ist jedoch hier nicht von weiterem Belang. Im einzelnen nicht näher dargestellte Freilufthochspannungsleitungen kommen von der oberen Seite der Figur 1 aus an einem gemeinsamen Portal 20 mit fünf Pfeilern an. An dem Portal 20 sind die Freiluftleitungen an Überspannungsableitern 9 angeschlossen, die jeweils Ansprechzähler aufweisen können. Von jedem Überspannungsableiter 9 ist die Freiluftleitung jeweils zu einer benachbarten Durchführung 6 auf SF₆-GIS-Technologie geführt und an deren Freiluftanschluß angeschlossen. Um eine ausreichende Isolation der Endstücke der Freiluftleitungen und der Freiluftanschlüsse an den Durchführungen 6 zu gewährleisten, müssen dabei die Durchführungen 6 in den notwendigen Freiluftisolationsabständen voneinander angeordnet sein; sie spannen also insgesamt eine im wesentlichen der Gesamtbreite der ankommenden Freiluftleitungen entsprechende Baulänge auf.

Von dem Feld der Durchführungen aus führt ein System von SF₆-GIS-Ausleitungen 21 jeden einzelnen Pol zu einer einphasig gekapselten GIS-Einfachsammelschiene 22, an der die Pole jeweils über Leistungsschalter 1 angekoppelt sind. Dabei handelt es sich in der Figur um die untere Reihe aus zwölf Leistungsschalterpolen 1. Der konventionelle Aufbau eines solchen Anschlusses einer GIS-Ausleitung an eine GIS-Einfachsammelschiene über einen Leistungsschalter und die zugehörigen, hier nicht weiter dargestellten und erläuterten, Bauteile sind dem Fachmann bekannt.

Von der Sammelschiene 22 aus ist jeder Pol über einen jeweiligen weiteren Leistungsschalter 1, also die oberen drei einpoligen Leistungsschalter 1 in der Figur, zu Ausleitungen 12 geführt, die zu drei Anschlüssen 14 eines Hochspannungstransformators 13 geleitet sind.

Insgesamt ist durch diese Anlage eine über die einzelnen einpoligen Leistungsschalter 1 schaltbare elektrische Verbindung zwischen den im oberen Teil der Figur angeschlossenen Hochspannungsfreiluftleitungen und dem Hochspannungstransformator 13 gegeben. An dem hier beschriebenen Stand der Technik ist für die im Folgenden dargestellte Erfindung der Aufbau des Systems aus Ausleitungen 21 zu den Freiluftanschlüssen und der Aufbau der Sammelschiene 22 wesentlich.

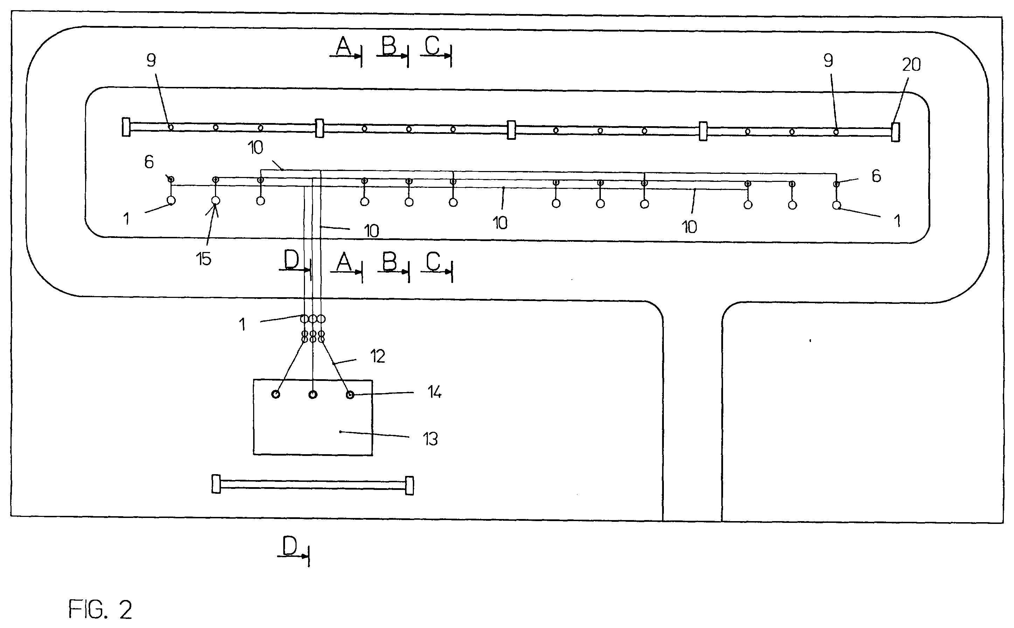

Die Figuren 2-8 zeigen ein erstes Ausführungsbeispiel für die Erfindung. Dabei zeigt Figur 2 eine Figur 1 entsprechende Draufsicht auf eine Umspannstation, bei der gleiche Hochspannungsfreiluftleitungen mit einem gleichen Hochspannungstransformator 13 verbunden sind. Wiederum kommen Freilufthochspannungsleitungen an einem Portal 20 mit Überspannungsableitern 9 an und sind von dort zu Durchführungen 6 des SF₆-GIS-Systems mit Freiluftanschlüssen geführt.

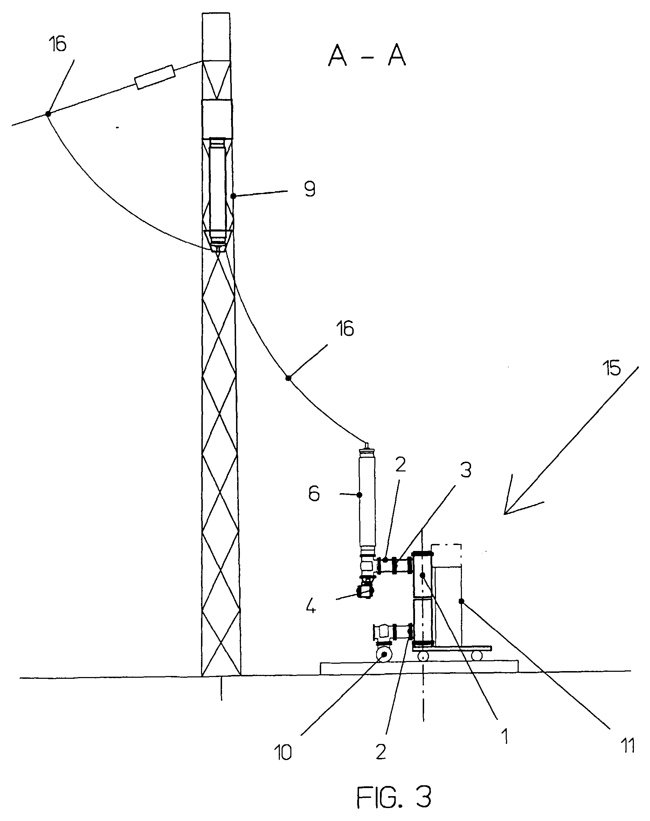

Die Hochspannungsfreiluftleitungen (mit Bezugsziffer 16), die Freiluftüberspannungsableiter 9 und die Durchführungen 6 sind in den Schnittdarstellungen in den Figuren 3, 4 und 5 zu erkennen, die den Schnitten A-A, B-B und C-C in Figur 2 entsprechen. Auf die weiteren Einzelheiten in diesen Schnittdarstellungen wird weiter unten noch eingegangen.

Von den Durchführungen 6 aus sind die einzelnen Pole in GIS-Technologie über einpolige Leistungsschalter 1 direkt zu einer einphasig gekapselten Einfachsammelschiene 10 geführt. Dabei erstreckt sich die Sammelschiene 10 über die gesamte von den Durchführungen 6 mit den Freiluftisolationsabständen voneinander aufgespannte Baulänge. Dies ist im einzelnen dargestellt in den Schnittdarstellungen in den Figuren 3, 4 und 5. Dabei entsprechen sich die Figuren 3, 4 und 5 untereinander bis auf die jeweilige Lage des betreffenden Pols der Sammelschiene 10.

Man erkennt in Figur 3 zunächst von links kommend die Freilufthochspannungsleitung 16, die über den Überspannungsableiter 9 zu dem Freiluftanschluß der Durchführung 6 läuft. Im unteren linken Teil des GIS-Aufbaus erkennt man einen Schnitt durch einen Pol der Sammelschiene 10 direkt auf dem Fundament. Ein Abgang der Sammelschiene 10 führt zu einem horizontal eingebauten Trennelement 2, der an einen unteren Anschluß des vertikal eingebauten Leistungsschalterpols 1 führt. Durch den Leistungsschalterpol 1 führt eine strichpunktierte vertikale Bezugslinie, die der Symboldarstellung des Leistungsschalters 1 in Figur 2 entspricht. Der einpolige Leistungsschalter 1 ist aufgebaut auf einem Rollwagen 19, auf dem jedoch nicht die Sammelschiene 10 liegt. Von dem oberen Anschluß des einpoligen Leistungsschalters 1 aus führt eine waagerecht eingebaute Kombination aus einem Stromspannungssensor 3 und ein Trennelement 2 auf ein T-Winkelstück, an dessen nach unten weisenden Ende ein Schnellerdungsschalter 4 und an dessen nach oben weisende Ende die Durchführung 6 montiert ist. Ein Steuerschrank 11 ist neben dem Leistungsschalterpol 1 auf dem Wagen 19 aufgebaut.

Die Bauteile 1, 2, 3, 4, 6, 11 und 19 bilden gemeinsam ein einpoliges Schaltmodul 15 zwischen der Freilufthochspannungsleitung und der GIS-Sammelschiene 10. Bei Bedarf kann das gesamte Modul 15 am Freiluftanschluß der Durchführung 6 von der Freilufthochspannungsleitung 16 und vom unteren Trennelement 2 von der Sammelschiene 10 getrennt und über ein Verschieben des Wagens 19 in die Figur nach rechts von der Sammelschiene weggefahren werden. Dadurch kann ein anderes Modul unmittelbar danach montiert und angeschlossen werden, so daß eine Wartungs- oder Reparaturzeit für das abgebaute Modul 15 nicht zu wesentlichen Zeitverzögerungen im Betrieb der gesamten Anlage führt.

Durch die jeweils vertikale Anordnung des einpoligen Leistungsschalters 1 und der Durchführung 6 ist für den Freiluftanschluß der Durchführung 6 eine ausreichende Höhenlage erreicht, so daß durch Personen eine Berührung der Freiluftleitung 16 oder ein Verkürzen der Freiluftisolationsabstände zwischen einzelnen Polen der Freiluftleitung 16 ausgeschlossen ist.

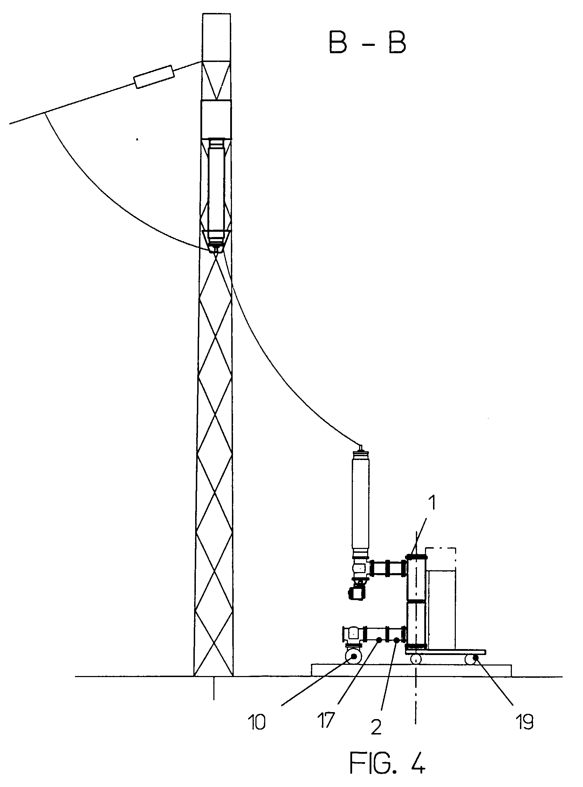

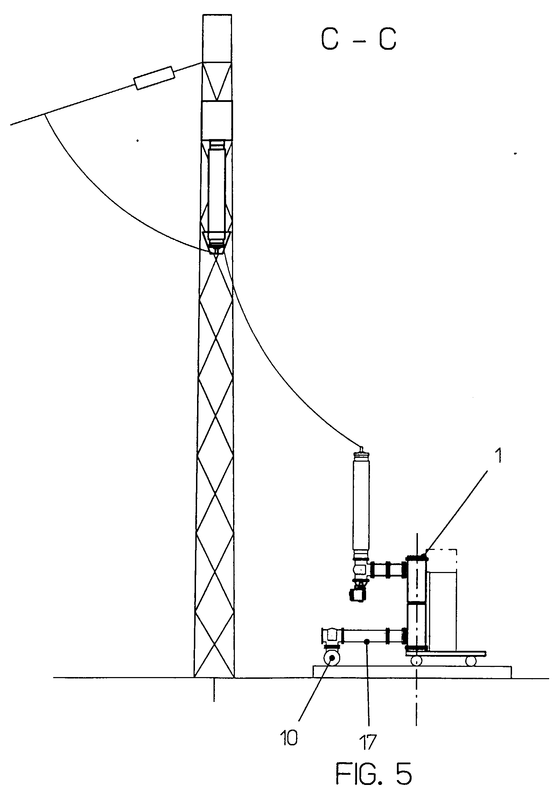

Die Figuren 4 und 5 zeigen mit den Schnittdarstellungen B-B und C-C völlig äquivalente Aufbauten zu dem in Figur 3 mit dem Schnitt A-A. Es sind lediglich die beiden in der Darstellung in Figur 2 weiter oben liegenden, also in den Schnitten weiter links liegenden Pole der Sammelschiene 10 mit ihrem Anschluß an einen jeweiligen einpoligen Leistungsschalter 1 gezeigt, wobei ein jeweiliges kurzes GIS-Leitungsstück 17 der Sammelschiene 10 in rechtem Winkel von der Hauptrichtungsammelschiene 10, also in die in den Schnittdarstellungen B-B und C-C horizontale Richtung und in der Draufsicht in Figur 2 vertikale Richtung, abgezweigt ist, um jeweils über den oder die zwischen dem betreffenden Pol der Sammelschiene 10 und dem Leistungsschalterpol 1 liegenden weiteren Pol(e) der Sammelschiene 10 hinüberzuführen. Dieses kurze Sammelschienenstück 17 ist jeweils an dem bereits anhand Figur 3 erläuterten unteren Trennelement 2 angeschlossen.

In Figur 2 in der Draufsicht ist zu erkennen, daß an einer (im Grunde beliebigen) Stelle entlang der Längenerstreckung der Sammelschiene 10 ein Zweig jedes Pols der Sammelschiene, also ein Zweig der Gesamtsammelschiene, über ein gewisses Stück senkrecht zu der Hauptrichtung der Sammelschiene 10 zu weiteren drei Leistungsschalterpolen 1 führt, die über Ausleitungen 12 zu den Anschlüssen 14 des bereits bei der Beschreibung des Standes der Technik erwähnten Hochspannungstransformators 13 führen. Hier können die Leistungsschalterpole 1 auch im Bereich des Hauptstrangs der Sammelschiene 10 angeordnet sein, so daß die Ausleitungen 12 ähnlich wie in Figur 1 zu dem Transformator 13 führen könnten.

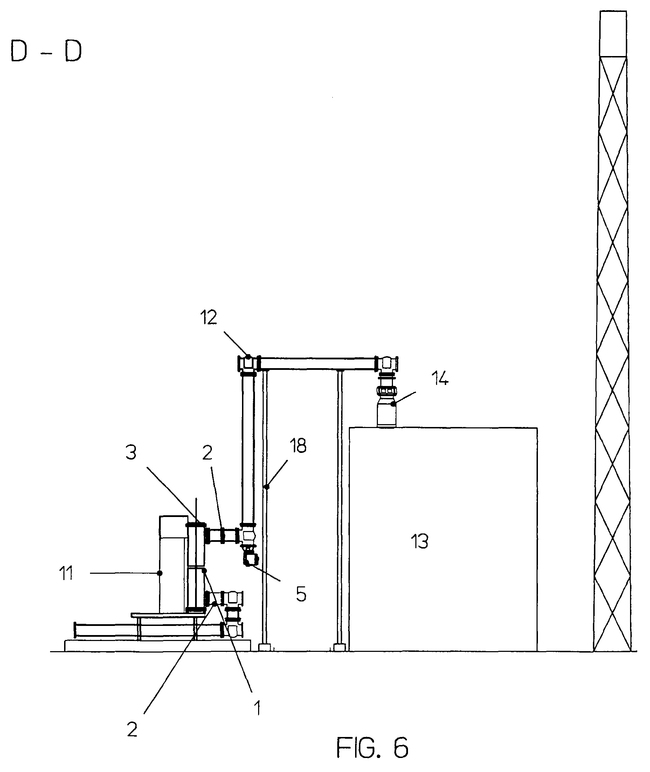

Figur 6 zeigt in der Schnittdarstellung D-D eine detailliertere Ansicht zu dem Anschluß der Sammelschiene 10 an dem Transformator 13. Im unteren linken Bereich der Figur 6 erkennt man ein auf dem Fundament verlaufendes Stück der Sammelschiene 10, das über zwei Winkelstücke und ein Trennelement 2 an einem der einpoligen Leistungsschalter 1 angeschlossen ist. Neben dem vertikal montierten Leistungsschalter 1 befindet sich wiederum ein Schaltschrank 11. Am oberen Ende des Leistungschalters 1 ist über einen Stromspannungssensor 3 und ein weiteres Trennelement 2 wiederum ein T-Winkelstück mit einem Arbeitserdungsschalter 5 am unteren Ende angeschlossen. Am oberen Ende des T-Winkelstücks ist die Ausleitung 12 montiert, die über eine Brücke 18 hinweg zu einem der Anschlüsse 14 des Transformators 13 führt.

Das in Figur 6 rechts und in Figur 2 (sowie in Figur 1) im unteren Bereich erkennbare weitere Portal trägt nicht im einzelnen dargestellte Freiluftleitungen, die an die zweite Spannungsebene des Transformators 13 angeschlossen sind.

Man erkennt im Vergleich der Figuren 6 und 3, daß bei geeigneter Auslegung in beiden Fällen, d. h. zum Anschluß an die Durchführung 6 und zum Anschluß an die Ausleitung 12 praktisch identische Module verwendet werden können. Dies ist vor allem dann sinnvoll, wenn die in den Figuren 3, 4 und 5 gezeigten Durchführungen 6 an einem eigenen (dort nicht dargestellten) Gestell aufgehängt sind, so daß bei modularem Ausbau des Schalters 1 die Durchführung 6 nicht mitbetroffen ist. Dann kann das Leistungsschaltermodul abgebaut werden, und die Durchführung 6 bleibt am Platz. Dazu wird das zwischen der Durchführung 6 und dem einpoligen Leistungsschalter 1 vorgesehene Trennelement 2 verwendet, so daß eine Auftrennung zwischen dem Trennelement 2 und dem Stromspannungssensor 3 oder dem Stromspannungssensor 3 und dem Leistungsschalter 1 erfolgen kann, ohne die Freiluftleitung 16 freischalten zu müssen.

Wenn andererseits die Durchführung 6 zu dem Modul 15 gehört, muß zum Lösen der Freiluftleitung 16 von dem Freiluftanschluß an der Durchführung 6 eine Trenneinrichtung an anderer Stelle vorgesehen sein, die eine Freischaltung der Freiluftleitung 16 erlaubt. Dann kann das obere Trennelement 2 auch ganz entfallen. Auch in diesem Fall kann die weitgehende Anpassung des Moduls 15 an den in Figur 6 dargestellten Aufbau und umgekehrt sinnvoll sein, weil dann lediglich ein entsprechendes Modul mit einer Durchführung 6 verschraubt oder von einer Durchführung 6 getrennt werden muß, um es im jeweils anderen Fall einsetzen zu können.

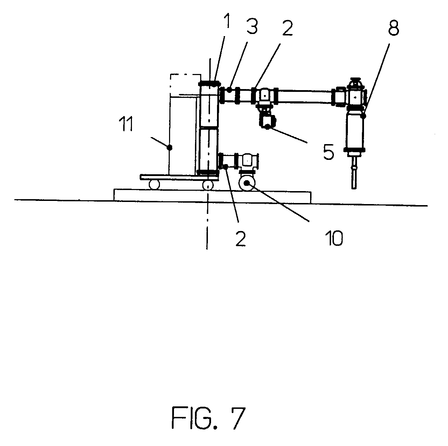

Figur 7 zeigt eine Alternative zu Figur 6, und zwar dadurch, daß anstelle der Ausleitung 12 ein Kabelanschluß 8 mit Trennlasche an dem T-Winkelstück mit dem Arbeitserdungsschalter 5 angebracht ist. Dieser Kabelanschluß 8 kann z. B. zu einem innerstädtischen Kabelversorgungsnetz oder zu einem über die Kabel angeschlossenen Transformator führen. Im Bereich dieses Kabelanschlusses 8 ist natürlich keine Spreizung auf Freiluftabstände nötig.

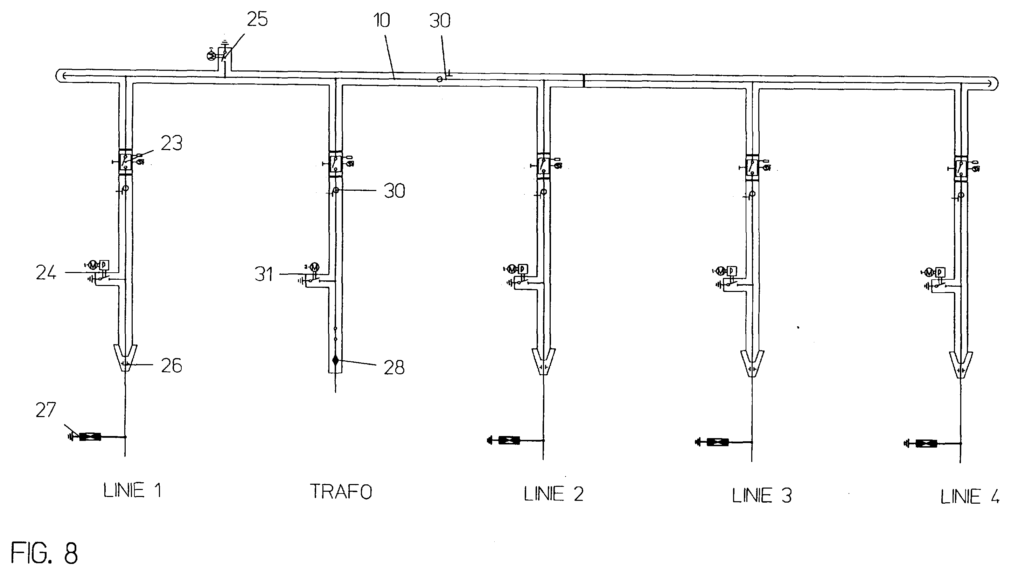

Figur 8 zeigt ein übliches formales Schaltdiagramm für den in den Figuren 2-6 dargestellten Aufbau. Gezeigt ist die Sammelschiene 10 mit vier, mit den Begriffen Linie 1 bis Linie 4 bezeichneten Abgängen zu den Freiluftleitungen. An diesen Abgängen sind zunächst Leistungsschalter angeschlossen, deren Symbole in dem Diagramm summarisch mit 23 bezeichnet sind. Dabei ist jeder Leistungsschalter beidseits gegen die angrenzenden GIS-Leitungen geschottet und mit einem Gasdichtewächter, einer Berstscheibe und einem SF₆-Gaseinfüllstutzen versehen. Freiluftseitig von der Leistungsschaltereinheit 23 liegt jeweils ein Stromspannungskombinationsmeßgerät, das mit 30 bezeichnet ist. Freiluftseitig davon findet sich ein motorbetriebener Schnellerder mit der Ziffer 24, von dem aus die Leitung zu dem Schaltsymbol 26 für die Durchführung zur Freiluftleitung gelangt. Daran schließt sich im unteren Bereich der Figur 8 die Freiluftleitung mit dem Überspannungsableiter an, der hier mit 27 bezeichnet ist.

Der zweite Abgang von links in der Figur führt ebenfalls über eine Leistungsschaltereinheit und einen Stromspannungssensor und einen weiteren Erder, hier jedoch einen motorbetriebenen Dreiphasenarbeitserder 31, zu dem Anschluß 28 an dem Transformator.

Die Sammelschiene 10 weist einen einphasigen motorbetriebenen Arbeitserder 25 auf sowie einen Stromspannungssensor 30. Schließlich enthält sie zwischen dem Abgang zur Linie 2 und dem Abgang zur Linie 3 einen als Querstrich eingezeichneten Schottisolator.

Das Diagramm entspricht den vorherigen Figuren 2-6, wobei in dem Diagramm alle drei Phasen summarisch gezeichnet sind. Dementsprechend gibt es in dem Schaltdiagramm einen Transformatoranschluß und vier Freiluftanschlüsse, wohingegen die 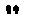 bauliche" Figur 2 drei einpolige Anschlüsse am Transformator 13 und zwölf einpolige Anschlüsse an den Freiluftleitungen zeigt.

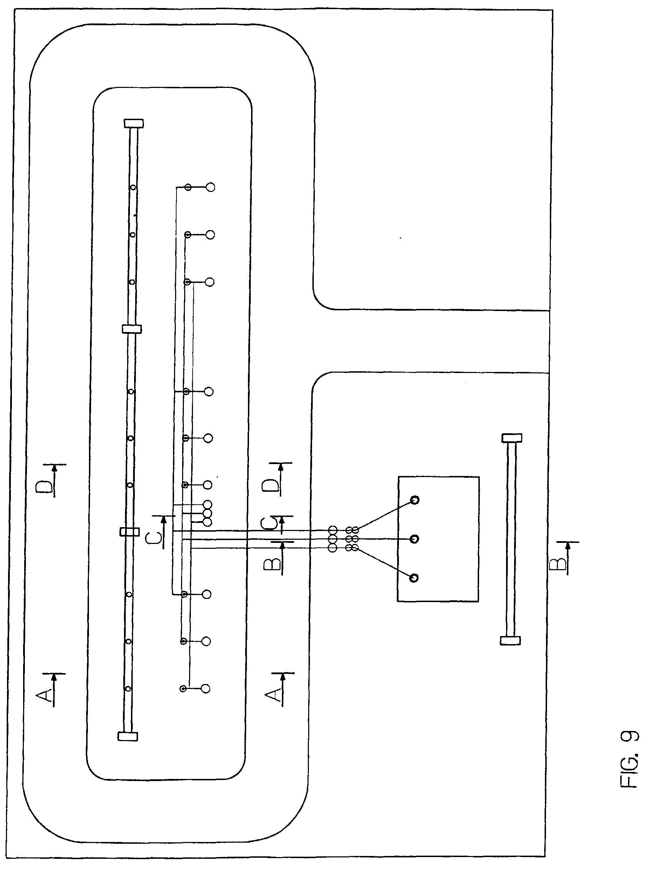

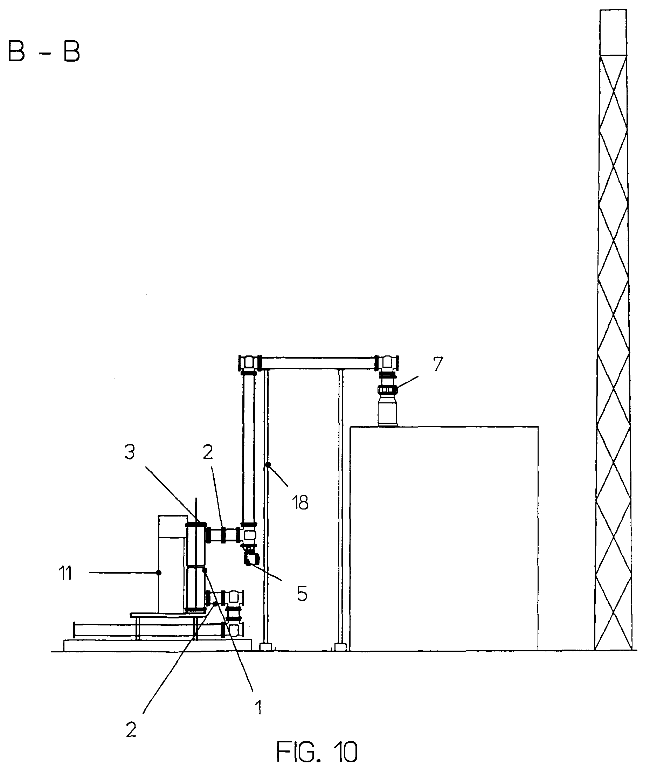

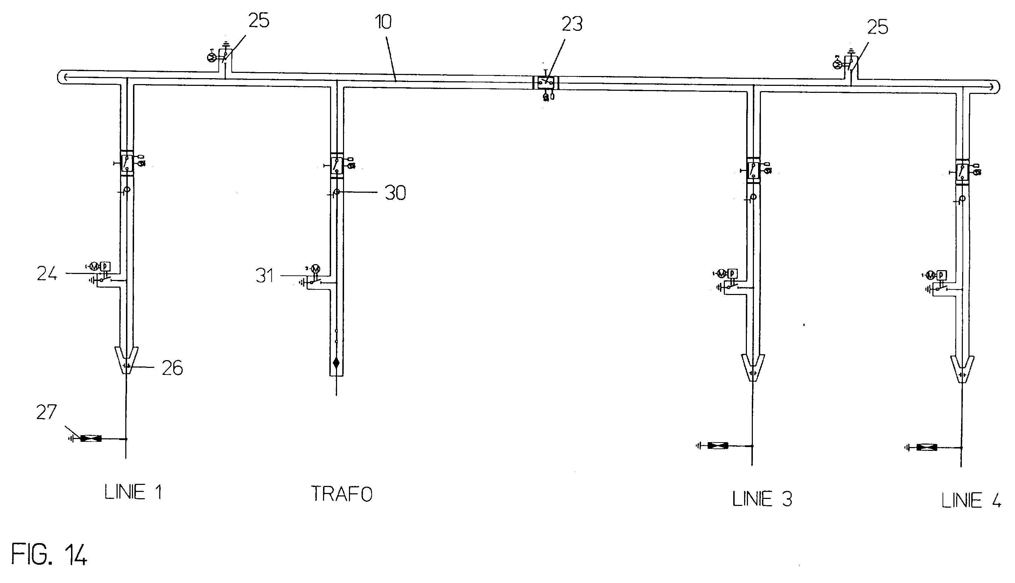

Aus diesem Diagramm heraus wird der wesentliche Unterschied zu dem folgenden Ausführungsbeispiel in den Figuren 9-14 deutlich. Figur 14 zeigt ein entsprechendes Schaltdiagramm für eine sogenannte H-Konfiguration. Dieses Schaltungsprinzip ist dem Fachmann bekannt und wird hier nicht weiter erläutert. Es sind die gleichen Bezugsziffern wie in Figur 8 verwendet, und in den Figuren 9-13 die gleichen Bezugsziffern wie in den Figuren 2-6. Ein wesentlicher Unterschied besteht darin, daß nur drei jeweils dreipolige Freiluftleitungen (Linien 1, 3 und 4) mit einem Transformator verbunden sind. Dabei zeigt das Schaltdiagramm in Figur 14 im Unterschied zu Figur 8 einen Leistungsschalter innerhalb der Sammelschiene 10 zwischen dem Bereich mit den Abgängen zur Linie 1 und dem Transformator einerseits und dem Bereich mit den Abgängen zur Linie 3 und Linie 4. Dementsprechend sind an der Sammelschiene 10 zwei Arbeitserder 25 vorgesehen.

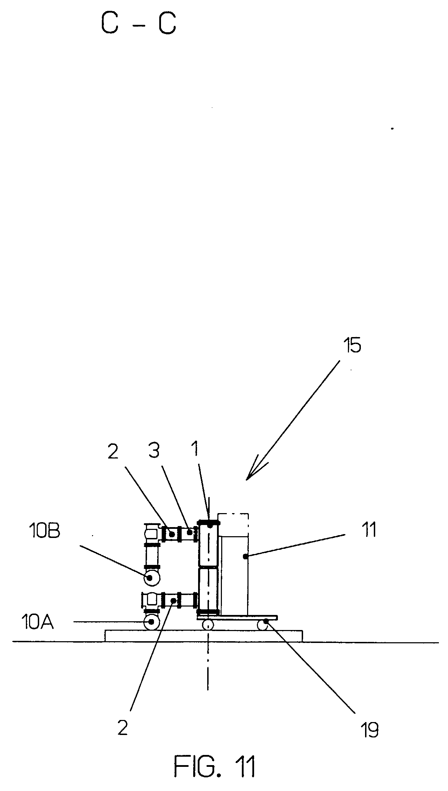

Die baulichen Konsequenzen dieses Schaltungsaufbaus zeigen die Figuren 9-13. In Figur 9 ist bereits zu erkennen, daß eine der vier Einheiten des Portals 20 für die Freiluftleitungen 16 fehlt. Dementsprechend haben die drei einpoligen Leistungsschalter 1 in diesem Bereich, der im Schnitt C-C in Figur 11 dargestellt ist, nicht die Aufgabe der Verbindung der Sammelschiene 10 mit einem anderen Hochspannungsgerät, sondern dienen zur Unterbrechung der Sammelschiene 10 in sich gemäß dem Leistungsschalter 23 in Figur 14 im oberen Bereich in der Mitte. Figur 11 zeigt, daß dabei ein auf dem Fundament verlaufender Teil 10A der Sammelschiene, der in der Draufsicht in Figur 9 links angeordnet ist, mit einem etwas darüber verlaufenden Teil 10B, der in Figur 9 im rechten Bereich angeordnet ist, verbunden ist. Wiederum ist eine dem bereits beschriebenen modularen Aufbau entsprechende Lösung gewählt.

Da der Leistungsschalter 23 keinen Übergang auf das Freiluftleitungssystem darstellt, ist hier auch keine Spreizung der Sammelschienenabgänge auf Freiluftabstände notwendig.

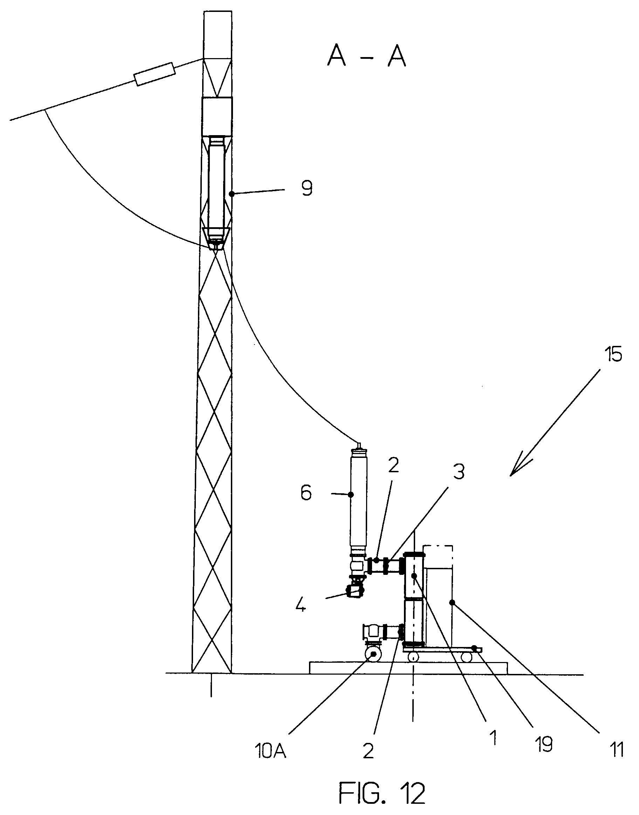

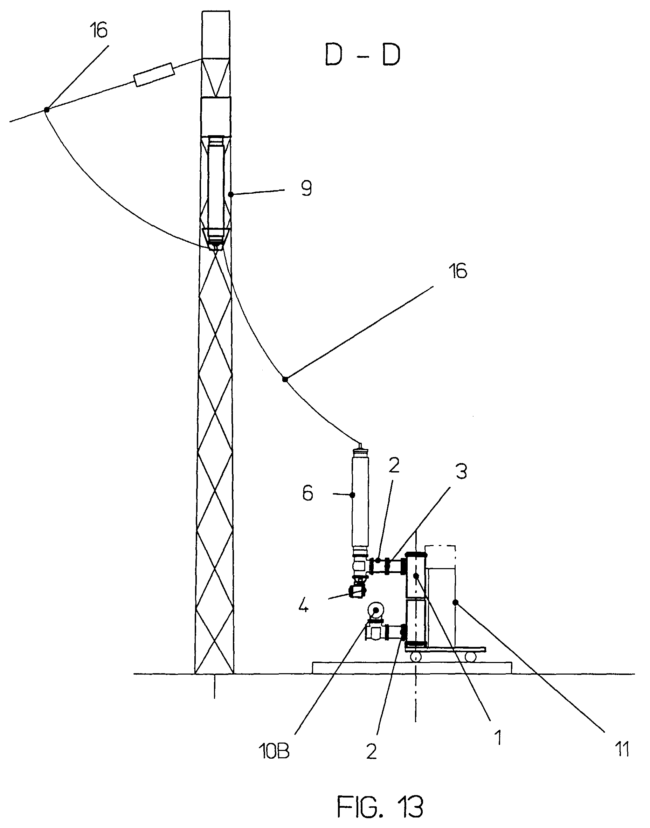

Zu der Draufsicht in Figur 9 zeigt der Schnitt A-A in Figur 12 den unten liegenden Teil 10A der Sammelschiene und der Schnitt D-D in Figur 13 den oben liegenden Teil 10B. Dabei liegt der Anschluß des Sammelschienenabgangs im einen Fall über dem Sammelschienenstück 10A und dem anderen Fall unter dem Sammelschienenstück 10B und dabei in beiden Fällen auf gleicher Höhe. Dementsprechend unterscheiden sich die Schaltermodule 15 in den Figuren 12 und 13 nicht voneinander. Von der Durchführung 6 abgesehen gilt das auch für Figur 11.

Der übrige Aufbau entspricht dem Aufbau in den Figuren 2-6 und wird hier nicht wiederholt. Die Darstellung der beiden Schaltungskonfigurationen Einfachsammelschiene und H-Konfiguration soll verständlich machen, daß das erfindungsgemäße Konzept gespreizter Sammelschienen und modular aufgebauter Schaltmaschinen an den Freiluftanschlüssen bzw. Freiluftdurchführungen universell einsetzbar ist.

## Patentansprüche

1. Vorrichtung zum elektrischen Verbinden einer ersten Freilufthochspannungseinrichtung (16) mit einer zweiten Hochspannungseinrichtung (13) über ein mit einem Isolationsmedium isoliertes Leitungssystem mit einer Sammelschiene (10, 10A, 10B), die über Sammelschienenabgänge mit Durchführungen (6) mit der Freilufthochspannungseinrichtung (16) verbunden ist,
dadurch gekennzeichnet, daß diese Sammelschienenabgänge an der Sammelschiene (10) in Freiluftisolationsabständen voneinander liegen.

2. Vorrichtung nach Anspruch 1, bei der das mit einem Isolationsmedium isolierte Leitungssystem ein druckgasisoliertes, vorzugsweise ein SF₆-isoliertes Leitungssystem ist.

3. Vorrichtung nach Anspruch 1 oder 2, bei der die Sammelschiene (10) als einphasig oder dreiphasig gekoppelte Sammelschiene aufgebaut ist.

4. Vorrichtung nach einem der vorstehenden Ansprüche mit an den Sammelschienenabgängen vorgesehenen Schalterpolen (1).

5. Vorrichtung nach Anspruch 4, bei der jeder Schalterpol (1) als von der jeweiligen Durchführung (6) und dem jeweiligen Sammelschienenabgang lösbares und abziehbares Modul (15) ausgebildet ist.

6. Vorrichtung nach Anspruch 5, bei der das Modul (15) auf einem verschieblichen oder verfahrbaren Wagen (19) montiert und durch eine Verschiebung oder ein Verfahren des Wagens (19) abziehbar ist.

7. Vorrichtung nach Anspruch 5 oder 6, bei der das Modul (15) zusätzlich einen Trenner (2) und/oder einen Erder aufweist.

8. Vorrichtung nach einem der Ansprüche 4-7, bei der der Schalterpol (1) vertikal angeordnet ist und die Sammelschiene (10) am unteren Anschluß und die Durchführung (6) am oberen Anschluß des Schalterpols (1) angeschlossen ist.

9. Hochspannungsbaueinheit für eine Vorrichtung nach einem der vorstehenden Ansprüche, zumindest Anspruch 5, mit einem Schalterpol (1), einem Anschluß für einen Sammelschienenabgang und einer Durchführung (6) zu einem Freilufthochspannungsanschluß, wobei der Schalterpol (1), der Anschluß und ein anschlußseitiger Teil der Durchführung (6) mit einem Isolationsmedium isoliert sind und wobei die Durchführung (6) ohne zwischengeschaltete Ausleitung (12, 21) an dem Schalter angeschlossen ist.

10. Hochspannungsbaueinheit nach Anspruch 9 mit einer Trennvorrichtung auf der dem Schalterpol (1) zugewandten Seite der Durchführung (6) zum Abbauen eines den Schalterpol (1) umfassenden Moduls von der Durchführung (6).
